# EUROPÄISCHE PATENTANMELDUNG

(11) **EP 0 641 752 A2**
(43) Veröffentlichungstag der Anmeldung: **08.03.1995**
(21) Anmeldenummer: 94113039.5
(22) Anmeldetag: 20.08.1994
(51) Int. Cl.: C05F 9/00, C05F 15/00, C05F 5/00

(54) **Verfahren zur Herstellung eines Pflanzendüngers**

(30) Priorität: 01.09.1993 DE 4329454
(71) Anmelder: Boeuf, Horst, D-76684 Östringen (DE)
(72) Erfinder: Boeuf, Horst, D-76684 Östringen (DE)
(74) Vertreter: Lasch, Hartmut Dipl.-Ing.

(57) **Zusammenfassung**

Es wird ein Verfahren zur Herstellung eines Pflanzendüngers vorgeschlagen, wobei zunächst Obst- und Gemüsefrüchte, insbesondere Zitrusfrüchte, Paprika, Aprikosen, Pfirsiche und Nektarinen zu einem musartigen Brei zerkleinert, vorzugsweise zerschlagen werden. Anschließend wird der pH-Wert des Breies durch Zuschlagstoffe, insbesondere Kalk, auf einen Soll-Wert im neutralen Bereich eingestellt. Durch Ausbringen dieses neutralisierten Fruchtbreies auf das Feld kann den Pflanzen eine relevante Nährstoffmenge zugeführt werden. Eine Vorrichtung zur Durchführung des Verfahrens umfaßt eine Mühle, in der die Früchte zu dem Brei zerkleinerbar sind und einen Vorratsbehälter mit einer Mischvorrichtung, mittels der die zugeführten Zuschlagsstoffe mit dem Brei durchmischbar sind.

## Beschreibung

Die Erfindung betrifft ein Verfahren zur Herstellung eines Pflanzendüngers.

Auf dem weg vom Erzeuger zum Endabnehmer, d.h. dem Verbraucher, wird ein nicht unerheblicher Teil von Obst- und Gemüsefrüchten geschädigt oder in der Qualität infolge eines übermäßig langen oder unsachgemäßen Transports beeinträchtigt. Derartige Früchte kommen nicht in den Handel, sondern werden vorher aussortiert. Auf diese Weise fällt eine relativ große Menge an Abfallfrüchten an, die als Sondermüll auf einer Deponie zu lagern sind. Da die Abfallfrüchte einen relativ hohen Wassergehalt und somit einen relativ geringen Feststoffanteil besitzen, werden sie auf Mülldeponien nur sehr ungern angenommen, wobei einige Deponiebesitzer die Einlagerung von Abfallfrüchten bereits für unzulässig erklärt haben. Darüber hinaus ist der Säuregehalt der Abfallfrüchte meistens hoch, wodurch bei größeren Einlagerungsmengen die Gefahr einer hohen Säurebelastung des Bodens gegeben ist. Des weiteren sind die durch die Deponielagerung entstehenden Kosten pro Tonne Abfallfrüchte bereits heute relativ hoch und werden in naher Zukunft drastisch ansteigen, so daß eine hohe Kostenbelastung für die Erzeuger, Importeure und Abnehmer zu erwarten ist.

Es wird versucht, die Abfallfrüchte zu kompostieren. Dabei tritt jedoch das Problem des Kompost-Abwassers auf, das nicht mehr ungehindert in den Erdboden einsickern darf, so daß für die Kompostierung in großem Umfang Hallen mit einer wasserundurchlässigen Bodenplatte notwendig sind, wodurch die Kompostierung kostenintensiv und unwirtschaftlich wird.

Der Erfindung liegt die Aufgabe zugrunde, eine Möglichkeit zur schnellen und kostengünstigen Entsorgung von Obst- und Gemüsefrüchten, insbesondere Abfallfrüchten zu schaffen.

Diese Aufgabe wird dadurch gelöst, daß die Früchte zur Herstellung von Pflanzendünger verwendet werden, wobei nach dem erfindungsgemäßen Verfahren die Obst- und Gemüsefrüchte, insbesondere Zitrusfrüchte, Paprika, Aprikosen, Pfirsiche und Nektarinen, zu einem musartigen Brei zerkleinert werden und der pH-Wert des Breies durch Zuschlagstoffe auf 6,5 bis 7,5 eingestellt wird.

Das Zerkleinern der Früchte kann beispielsweise durch Schneiden oder Hacken erfolgen. Es hat sich jedoch bewährt, die Früchte zu dem Brei zu zerschlagen oder zu zerdrücken, da auf diese Weise auch die Kerne beispielsweise der Zitrusfrüchte, Pfirsiche etc. zuverlässig zerkleinert werden können. Andererseits hat es sich gezeigt, daß die relativ langen Fruchtfasern sich häufig an den Schneiden von Zerkleinerungsmessern festsetzen, wodurch der Betriebsablauf gestört werden kann, so daß auch aus diesem Grunde die Früchte zerschlagen oder zerdrückt werden sollten.

Wie bereits erwähnt, werden vorzugsweise Abfallfrüchte eingesetzt jedoch ist es ebenso möglich, ordnungsgemäße Früchte beispielsweise aus einer Überproduktion zu verarbeiten.

Je nach Art der verarbeiteten Früchte liegt der pH-Wert des Fruchtbreies mehr oder weniger im saueren Bereich. Für die pflanzenbauliche Verwertung des Breies wird deshalb der pH-Wert durch Zugabe von Zuschlagstoffen auf einen gewünschten Soll-Wert im neutralen Bereich von 6,5 bis 7,5 eingestellt. Als entsprechender Zuschlagstoff hat sich Kalk bewährt.

Mit der Zugabe von Kalk ist der weitere Vorteil verbunden, daß das Wasser des Fruchtbreis gebunden wird, so daß der Trockenmassegehalt ansteigt. Vorzugsweise sollte der Erzeuger oder Landwirt den Pflanzendünger in flüssiger Form auf dem Feld ausbringen, so daß bei einer hohen zugeführten Kalkmenge gegebenenfalls auch die weitere Zufuhr von Wasser sinnvoll sein kann.

Untersuchungen haben gezeigt, daß den Pflanzen mit dem neutralisierten Fruchtbrei eine pflanzenbaulich relevante Nährstoffmenge insbesondere an N, P₂O₅ und K₂O zugeführt werden kann, wobei gleichzeitig die Schwermetallgehalte im Vergleich zu Komposten sehr niedrig ausfallen. Auch organische Schadstoffe, beispielsweise Organochlor-Pestizide, Herbizide oder polychlorierde Biphenüle (PCB) sind in dem Fruchtbrei üblicherweise nicht vorhanden und stellen somit kein Problem dar.

In Weiterbildung der Erfindung kann vorgesehen sein, daß dem Brei zur Erzeugung eines Trockendüngers Wasser entzogen wird. Dies geschieht vorzugsweise durch Wärmezufuhr, beispielsweise in einer Wärmetrommel.

Eine Vorrichtung zur Durchführung des Verfahrens weist eine Mühle, in der die Früchte zu einem musartigen Brei zerkleinerbar sind, und einen Vorratsbehälter auf, in dem der Brei lagerbar ist, wobei in dem Vorratsbehälter eine Mischvorrichtung angeordnet ist, mittels der die zugeführten Zuschlagstoffe mit dem Brei durchmischbar sind.

Um den Brei von der Mühle in den Vorratsbehälter, der vorzugsweise ein Silo ist, zu fördern, ist zwischen der Mühle und dem Vorratsbehälter eine Pumpe vorgesehen, die gleichzeitig auch dazu dienen kann, den neutralisierten Fruchtbrei aus dem Vorratsbehälter in einen Tankwagen oder sonstigen Transportbehälter abzufüllen. Eine vollständige Zerkleinerung der Früchte und somit eine Erzeugung eines homogenen Breies läßt sich erreichen, wenn als Mühle eine Hammermühle eingesetzt wird.

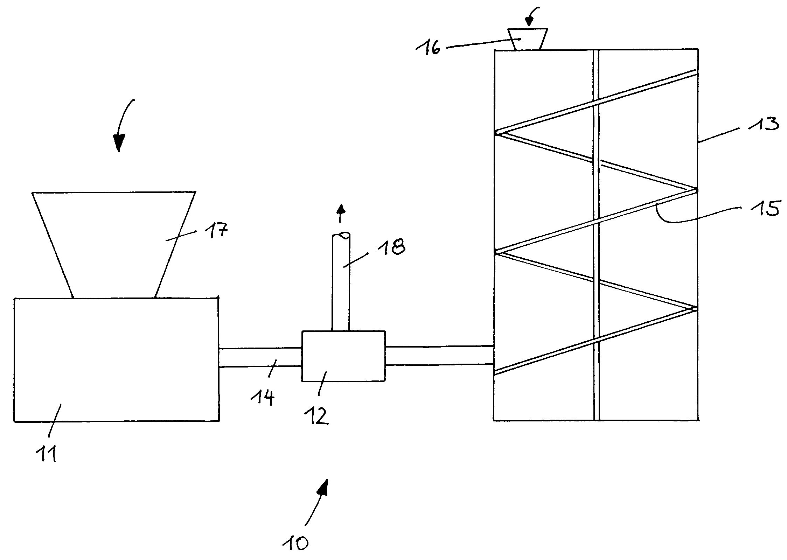

Weitere Einzelheiten und Merkmale der Erfindung sind aus der folgenden Beschreibung eines Ausführungsbeispiels unter Bezugnahme auf die Zeichnung ersichtlich, wobei die einzige Figur die Komponenten zur Durchführung des Verfahrens in schematischer Darstellung zeigt.

Eine Vorrichtung 10 zur Herstellung eines Pflanzendüngers umfaßt eine Hammermühle 11, der die Früchte über einen Trichter 17 oder in sonstiger Weise zugeführt werden können. Die Hammermühle 11 zerkleinert die Früchte zu einem homogenen Fruchtbrei, der mittels einer Pumpe 12 über eine Leitung 14 einem Silo 13 zuführbar ist. In dem Silo 13 ist eine Mischvorrichtung 15 in Form einer Mischschnecke angeordnet, die in nicht-dargestellter Weise angetrieben ist. Dem Innenraum des Silos 13 ist über einen Trichter 16 ein Zuschlagstoff zuführbar, wobei vorzugsweise Kalk in einer derartigen Menge Verwendung findet, daß der Säuregehalt des Fruchtbreies annähernd oder vollständig neutralisiert ist.

Nachdem der Fruchtbrei durch Betätigung der Mischvorrichtung 15 mit dem Kalk vollständig durchmischt ist und somit ein neutralisierter Fruchtbrei in dem Behälter 13 vorliegt, kann der Fruchtbrei mit Hilfe der Pumpe 12 über eine Abfüllleitung 18 einem nicht weiter dargestellten Transportbehälter, beispielsweise einem Tankwagen zugeführt werden.

## Patentansprüche

1. Verfahren zur Herstellung eines Pflanzendüngers, wobei Obst- und Gemüsefrüchte, insbesondere Zitrusfrüchte, Paprika, Aprikosen, Pfirsiche und Nektarinen, zu einem musartigen Brei zerkleinert werden und der pH-Wert des Breies durch Zuschlagstoffe auf 6,5 bis 7,5 eingestellt wird.

2. Verfahren nach Anspruch 1, dadurch gekennzeichnet, daß die Früchte zu dem Brei zerschlagen werden.

3. Verfahren nach Anspruch 1 oder 2, dadurch gekennzeichnet, daß als Früchte Abfallfrüchte eingesetzt werden.

4. Verfahren nach einem der Ansprüche 1 bis 3, dadurch gekennzeichnet, daß der pH-Wert des Breies durch Zuschlag von Kalk eingestellt wird.

5. Verfahren nach einem der Ansprüche 1 bis 4, dadurch gekennzeichnet, daß dem Brei zur Erzeugung eines Trockendüngers Wasser entzogen wird.

6. Verfahren nach Anspruch 5, dadurch gekennzeichnet, daß der Wasserentzug durch Wärmezufuhr erfolgt.
